# EUROPEAN PATENT APPLICATION

(11) **EP 1 804 028 A2**
(43) Date of publication of application: **04.07.2007**
(21) Application number: 06127274.6
(22) Date of filing: 28.12.2006
(51) Int. Cl.: G01C 21/36

(54) **Navigation apparatus and navigation program**

(30) Priority: 28.12.2005 JP 2005378172
(71) Applicant: Pioneer Corporation, Meguro-ku, Tokyo (JP); Increment P Corporation, Tokyo (JP)
(72) Inventor: Iwahori, Yasufumi c/o Increment P Corporation, Meguro-ku Tokyo (JP)
(74) Representative: Haley, Stephen

(57) **Abstract**

A navigation apparatus (7) includes map data (70), a map change information receiving unit (37,38) and a map display change unit (20,40). The map data (70) includes predetermined map information having two modes: an unavailable mode in which the map information is unusable, and an available mode in which the map information is usable. The map change information receiving unit (37, 38) receives change information of the predetermined map information, which is distributed by transmission. On receiving the change information, the map display change unit (20,40) switches the two modes of the predetermined map information.

## Description

The present invention relates to a navigation apparatus preferable for changing map data.

### Description of Related Art:

Conventionally, map data stored in a map data recording medium such as a CD-ROM (Compact Disc-Read Only Memory) or a DVD-ROM (DVD-Read Only Memory) is used in a navigation apparatus. Namely, the navigation apparatus includes a drive unit of the map data recording medium such as the CD-ROM and the DVD-ROM, and reads out, from the map data recording medium, the map data of the vicinity of a present position of a vehicle in correspondence to the movement of the vehicle to display it on a liquid crystal monitor mounted on the vicinity of a driver seat of the vehicle.

However, when a supply source of the map data is such a recording medium, there happens such a problem that updating of the map data cannot be frequently executed. The map data is updated in correspondence with maintenance of a new road system such as a highway. In addition, the map data used in the navigation apparatus includes information of neighboring facilities and stores (e.g., a convenience store and a gas station), other than road data. Recently, it is comparatively frequent that new stores are built and old stores are demolished. Therefore, it becomes necessary to frequently buy new map data recording media in order to always obtain the newest information, which is a burden for a user.

There is disclosed a technique of updating the map data in order to solve the problem (see Japanese Patent Application Laid-openunderNo. 2001-12957). In accordance with this technique, there is provided a map update data distribution apparatus for transmitting map update data, being updated map data, by transmission wave, and a navigation apparatus including a receiving unit for receiving the transmission wave. Then, the navigation apparatus receives the map update data transmitted by the transmission wave. Thereby, the map data is updated.

However, the above map update data distribution apparatus has to continue to transmit all the accumulated map update data until all the navigation apparatuses of all the users receive all the map update data, which may unnecessarily put a burden on an infrastructure. Additionally, unless the user always installs the map update data, the map information of the map data becomes out of date.

On the other hand, when a disaster such as an earthquake happens, it becomes necessary that the navigation apparatus displays the map information such as an evacuation place in the map data and the shortest route thereto on a display screen without unnecessarily putting a burden on the infrastructure.

The present invention has been achieved in order to solve the above problems. It is an object of this invention to easily change map data without unnecessarily putting a burden on infrastructure.

According to one aspect of the present invention, there is provided a navigation apparatus including: map data which includes predetermined map information used in one of two modes including an unavailable mode in which the map information is unusable and an available mode in which the map information is usable; a map change information receiving unit which receives change information of the predetermined map information distributed by transmission; and a map display change unit which switches the two modes of the predetermined map information based on the received change information.

The above navigation apparatus includes the map data, the map change information receiving unit and the map display change unit. The map data includes the predetermined map information having the two modes, i.e., the unavailable mode in which the map data is unusable, and the available mode in which the map information is usable. The map change information receiving unit, which is a communication unit capable of receiving a transmission wave, receives the map change information distributed by the transmission. The map change information is update information and disaster information of the map, for example, and it includes 1D information of the predetermined map information and command information for instruction of the availability or unavailability of the predetermined map information. The map display change unit is a system controller, for example. On receiving the change information, the map display change unit switches the two modes of the predetermined map information, based on the change information, i.e., based on the command information for the instruction of the availability or unavailability of the predetermined map information. Thereby, even when the map data is changed, the navigation apparatus does not have to receive the changed map data itself. Therefore, it is possible to reduce a burden on the infrastructure, and the map data can be easily changed.

In one manner of the above navigation apparatus, the predetermined map information may be map information which is preset to the unavailable mode, and the change information may be update information for instructing to set the predetermined map information to the available mode. The map display change unit may set the predetermined map information to the available mode based on the received change information. Thereby, the navigation apparatus can prevent the map information from becoming out of date. At the same time, even when the map data is changed, since the navigation apparatus does not have to receive the changed map data itself, it is possible to reduce a burden on the infrastructure.

In a preferred example of the above navigation apparatus, the predetermined map information may be map information which is preset to the available mode, and the change information may be update information for instructing to set the predetermined map information to the unavailable mode. The map display change unit may set the predetermined map information to the unavailable mode based on the received change information.

In another manner of the above navigation apparatus, on receiving the update information, the map display change unit may display updating of the map data on a display screen. Concretely, the map display change unit displays the update-notifying text information associated with the update information, based on the command information displaying the update-notifying text information corresponding to the update information. Thereby, the user can recognize that the map data is updated.

In still another manner of the above navigation apparatus, the map display change unit may display issue of newest map data to a user on the display screen, when the predetermined map information does not exist in the map data. In this manner, the navigation apparatus can urge to install the newest map data by informing the issue of the new map data.

In a preferred form of the above navigation apparatus, the predetermined map information may show a road or/and a building.

In still another manner of the above navigation apparatus, the change information may be disaster information including first command information for instructing to display the predetermined map information as an evacuation place. The map display change unit may display the predetermined map information as the evacuation place, based on the first command information included in the received disaster information. Thereby, the user can recognize the evacuation place.

In still another manner of the above navigation apparatus, the disaster information may include second command information for instructing to search a shortest route to the evacuation place and display it on the display screen. The map display change unit may search the shortest route to the evacuation place, based on the second command information included in the received disaster information, and may display it on the display screen. Thereby, the navigation apparatus can inform the user of the route to the evacuation place to guide the user thereto.

In still another manner of the above navigation apparatus, the disaster information may include text information indicating a disaster situation and third command information for instructing to display the text information on the display screen. The map display change unit may display contents of the text information included in the disaster information on the display screen, based on the third command information included in the received disaster information. Thereby, the user can instantaneously know the concrete situation of the disaster.

According to another aspect of the present invention, there is provided a program executed by a navigation apparatus including map data which includes predetermined map information used in one of two modes including an unavailable mode in which the map information is unusable and an available mode in which the map information is usable, making the navigation apparatus function as: a map change information receiving unit which receives change information of the predetermined map information distributed by transmission; and a map display change unit which switches the two modes of the predetermined map information, based on the received change information. Thereby, when the map data is changed, the navigation apparatus does not have to receive the changed map data itself, and a burden on the infrastructure can be reduced.

The nature, utility, and further features of this invention will be more clearly apparent from the following detailed description with respect to preferred embodiment of the invention when read in conjunction with the accompanying drawings briefly described below.

FIG. 1 is a diagram showing a usage situation, of a navigation apparatus according to an embodiment; FIG. 2 is a block diagram showing a configuration of the navigation apparatus;

FIG. 3 is a diagram showing structure of map data in a data storage unit;

FIGS. 4A and 4B show diagrams showing an example of a map and ID information of map information according to the map data;

FIGS. 5A and 5B are diagrams showing maps displayed before and after receiving update information;

FIGS. 6A and 6B are diagrams showing maps displayed before and after receiving update information;

FIG. 7 is a flow chart showing a map display process according to a first embodiment;

FIGS. 8A and 8B are diagrams showing maps displayed before and after receiving disaster information;

FIGS. 9A and 9B are diagrams showing maps displayed before and after receiving accident information; and

FIG. 10 is a flow chart showing a map display process according to a second embodiment.

Now, preferred embodiments of the present invention will be described below with reference to the attached drawings. An explanation given below shows such an example that the present invention is applied to a communication-type navigation apparatus for a vehicle (hereinafter, simply referred to as "navigation apparatus").

### [First Embodiment]

### (Navigation Apparatus)

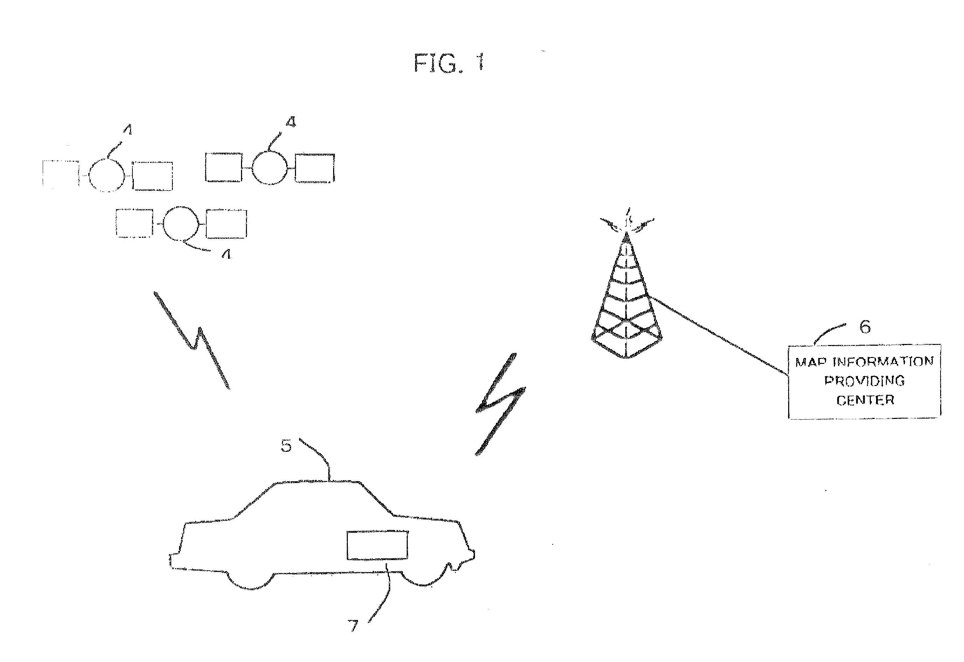

FIG. 1 schematically shows a usage situation of the navigation apparatus according to a first embodiment. In FIG. 1 a navigation apparatus 7 is loaded on a vehicle 5. The navigation apparatus 7 measures the vehicle position by receiving radio waves from plural satellites 4. In addition, by using a communication function, the navigation apparatus 7 obtains change information of map information distributed from a map information providing center 6 by the transmission wave. The change information of the map information will be described later.

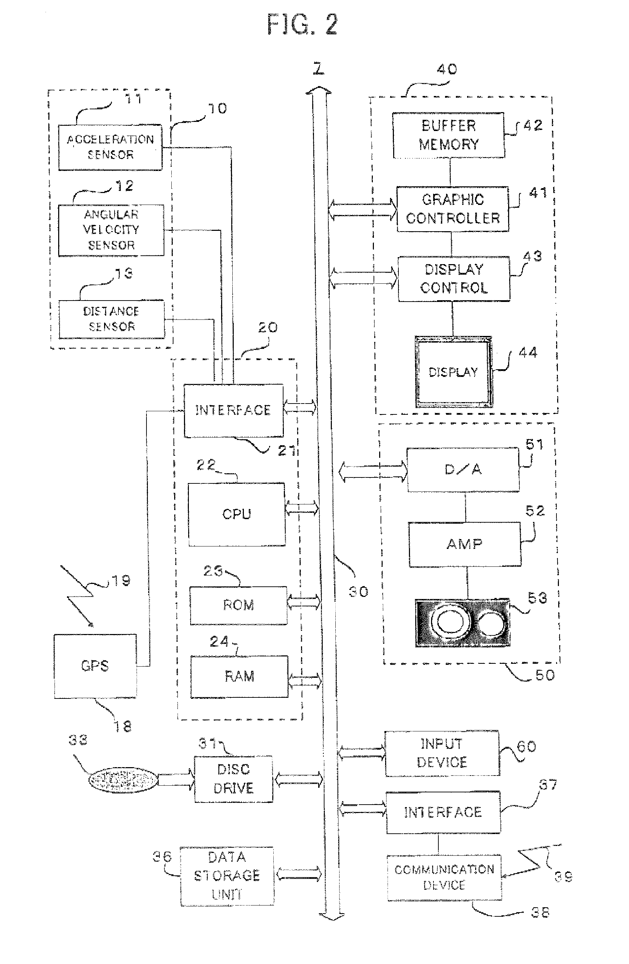

FIG. 2 shows a configuration of the navigation apparatus 7. As shown in FIG. 2, the navigation apparatus 7 includes a self position measuring device 10, a GPS receiver 18 , a system controller 20, a disc drive 31, a data storage unit 36, a communication interface 37, a communication device 38, a display unit 40, a sound output unit 50 and an input device 60.

The self position measuring device 10 includes an acceleration sensor 11, an angular velocity sensor 12 and a distance sensor 13. The acceleration sensor 11, including a piezoelectric element for example, detects acceleration of the vehicle and outputs acceleration data. The angular velocity sensor 12, including vibration gyro for example, detects angular velocity of the vehicle at the time of changing of the vehicle direction and outputs angular velocity data and relative azimuth data.

The distance sensor 13 measures a vehicle-speed pulse including a pulse signal generated in correspondence with the rotation of a wheel of the vehicle.

The GPS receiver 18 receives the radio wave 19 for transmitting down link data, including the position measuring data from the plural GPS satellites, which is used for detection of the absolute position of the vehicle based on the latitude and the longitude.

The system controller 20 includes an interface 21, a CPU (Central Processing Unit) 22, a ROM (Read Only Memory) 23 and a RAM (Random Access Memory) 24, and controls the entire navigation apparatus 7,

The interface 21 executes interface operation with the acceleration sensor 11, the angular velocity sensor 12, the distance sensor 13 and the GPS receiver 18. Then, the interface 21 inputs, to the system controller 20, the acceleration data, the relative azimuth data, the angular velocity data, the GPS positioning data, and the absolute azimuth data, in addition to the vehicle-speed pulse. The CPU 22 controls the entire system controller 20. The ROM 23 includes a non-volatile memory (not shown) in which the control program for controlling the system controller 20 is stored. The RAM 24 readably stores various kinds of data such as route data preset by a user via the input device 60, and supplies a working area to the CPU 22.

The system controller 20, the disc drive 31 such as a CD-ROM drive or a DVD-ROM drive, the data storage unit 3 6, the communication interface 37, the display unit 40, the sound output unit 50 and the input device 60 are mutually connected to each other via a bus line 30.

Under the control of the system controller 20, the disc drive 31 reads contents data such as sound data and video data from the disc 33 such as a CD or a DVD to output it. The disc drive 31 may be one of the CD-ROM drive and the DVD-ROM drive, or may be a compatible drive for CD and DVD. As a general rule in the present invention, it is necessary that the map data is pre-stored in the data storage unit 36 of the apparatus (hereinafter this process is also referred to as "preinstall"). The system controller 20 reads out the map data from the disc 33 such as the CD or the DVD storing the map data, and stores it in the data storage unit 36. Thereby, the preinstall is executed. The disc drive 31 is also used for reading out the map data from the CD-ROM or the DVD-ROM at the time of the preinstall.

The data storage unit 36 mainly stores the map data. When the preinstall is performed, the map data read out from the CD-ROM or the DVD-ROM is stored in the data storage unit 36.

The communication device 38 is a transmission wave receiving tuner capable of receiving the transmission wave 39, and can receive the change information of the map data transmitted from the map information providing center 6 via the communication interface 37.

Under the control of the system controller 20, the display unit 40 displays various kinds of display data on the display screen of a display. Concretely, the system controller 20 reads out the map data from the data storage unit 36, and the display unit 40 displays, on the display screen of the display, the map data read out from the data storage unit 36 by the system controller 20. The display unit 40 includes a graphic controller 41 for controlling the entire display unit 40 on the basis of the control data transmitted from the CPU 22 via the bus line 30, a buffer memory 42 including a memory such as a VRAM (Video RAM) and temporarily storing the picture information instantly displayable, a display control unit 43 for executing display control of a display 44 such as liquid crystal display and a CRT (Cathode Ray Tube) on the basis of the picture data outputted from the graphic controller 41, and the display 44. The display 44 includes a liquid crystal display device having a diagonal length of substantially 5-10 inches, for example, and it is mounted on the vicinity of a front panel in the vehicle.

The sound output unit 50 includes a D/A (Digital to Analog) converter 51 for executing D/A conversion of the sound digital data transmitted from the CD-ROM drive 31 or the DVD-ROM 32, or from the RAM 24 via the bus line 30 under the control of the system controller 20, an amplifier (AMP) 52 for amplifying a sound analog signal outputted from the D/A converter 51, and a speaker 53 for converting the amplified sound analog signal to the sound to output it into the vehicle.

The input device 60 includes keys, switches, buttons, a remote controller and a sound input device for inputting various kinds of commands and data. The input device 60 is arranged on a front panel of a main body of an on-vehicle electronic system mounted on the vehicle and around the display 44.

### (Updating of Map by Update Information)

First, a description will be given of an example in such a case that the update information indicating the completion of new road and building is transmitted, as an example of the change information of the map data transmitted from the map information providing center 6.

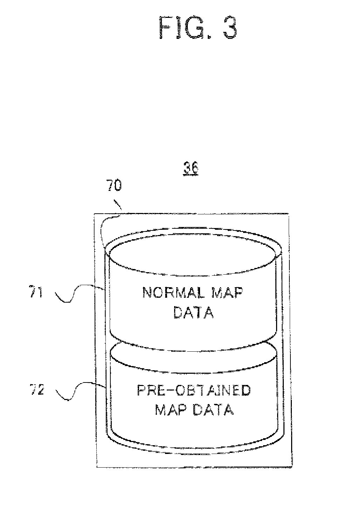

FIG. 3 shows structure of the map data 70 stored in the data storage unit 36. When the basic map data is preinstalled in the navigation apparatus 7, the map data 70 having the structure shown in FIG. 3 is stored in the data storage unit 36. The map data 70 includes normal map data 71 including the map information of the roads and buildings presently existing and pre-obtained map data 72 including the map information of the roads and buildings which will be built and completed in the future.

The pre-obtained map data 72 is concretely produced based on a road scheme drawing and a city program project drawing issued by the government and/or the local government, and it includes the map information of the roads and buildings completed in the future. When the user installs the map data in the navigation apparatus 7, those roads and buildings are not completed yet, and the user cannot use those roads and buildings. Therefore, displaying the map information of those roads and buildings on the map may mislead the user to a wrong direction, which is inappropriate. Hence, in this state, the navigation apparatus 7 does not display the map information according to the pre-obtained map data 72 on the display screen. By taking the road for example, the concrete explanation will be given below.

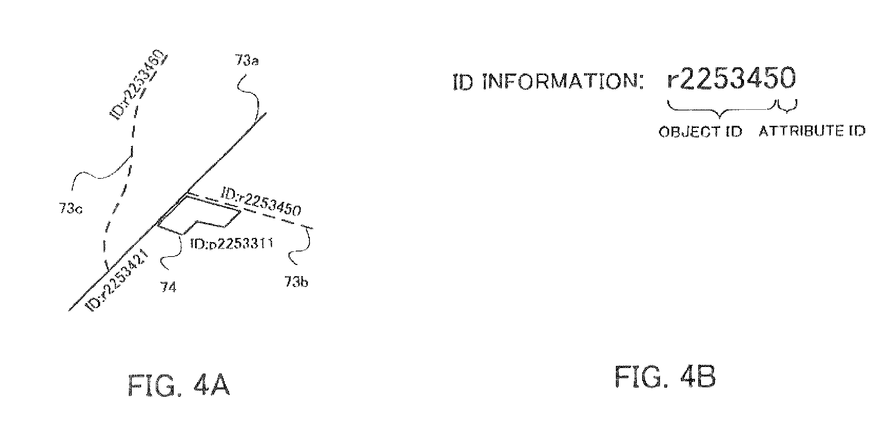

FIG. 4A shows an example of displaying the map according to the map data 70, and FIG. 4B shows an example of the ID information of the map information. The map data according to the map shown in FIG. 4A includes the map information such as roads 73a, 73b and 73c and a building 74. The map information of the building 74 is the map information of the building such as facilities and a store (e.g., a convenience store and a gas station). The road 73a and the building 74 shown by the solid line are the map information according to the normal map data 71, and the roads 73b and 73c shown by the broken line are the map information according to the pre-obtained map data 72. Namely, since the road 73a and the building 74 presently exist, the user can use them. However, since the roads 73b and 73c are not completed yet, the user cannot use them.

As shown in FIG. 4A, the ID information is given to the map information, respectively. In the example of the map shown in FIG. 4A, "r2253421" is given to the road 73a, and "r2253450" is given to the road 73b, for example. Similarly, "r2253460" and "p2253311" are given to the road 73c and the building 74, respectively.

As shown in FIG. 4B, the ID information includes an object ID and an attribute ID. The object ID is a number for identifying the map information, and different numbers are given to the respective map information. The attribute ID indicates whether the map information is in the available mode or in the unavailable mode. That "the map information is in the available mode" means that the navigation apparatus 7 can use the map information, e.g., the navigation apparatus 7 can display the map information on the display screen, can use it for a sound guidance and can use it at the time of the route search. Meanwhile, that "the map information is in the unavailable mode" means that the navigation apparatus 7 cannot use the map information, e.g., the navigation apparatus 7 cannot display the map information on the display screen and cannot use it at the time of the route search. In this embodiment, the last digit of the ID information is assigned to the attribute ID, for example. When the attribute ID is '''0'', the map information is in the unavailable mode. When the attribute ID is "1", the map information is in the available mode. As understood, since the map information according to the pre-obtained map data 72 is set to the unavailable mode in advance, the attribute ID is set to "0".

The navigation apparatus 7 determines whether the attribute ID of the map information is "0" or "1". When the attribute ID is "0", the navigation apparatus 7 does not display the map information on the display screen. When the attribute ID is "1", the navigation apparatus 7 displays the map information on the display screen. Thereby, the navigation apparatus 7 displays the road 73a and the building 74 shown by the solid line on the display screen, and does not display the roads 73b and 73c shown by the broken line on the display screen.

As a method of associating the attribute ID with each obj ect ID, a table in which the object IDs are classified by the value of the attribute ID may be used, instead of giving the attribute ID to each object ID, as described above.

On receiving the update information of the map information transmitted from the map information providing center 6, the navigation apparatus 7 according to this embodiment switches the two modes of the map information, i.e., the unavailable mode and the available mode, based on the update information. Thereby, even when the map data is updated, the navigation apparatus 7 does not have to receive the updated map data itself. The explanation will be concretely given below.

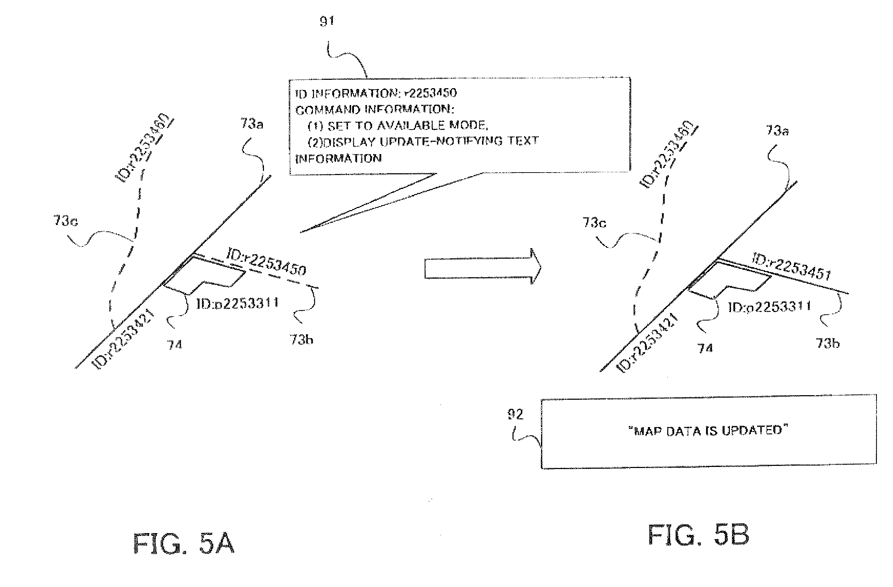

FIG. 5A shows a map displayed before the navigation apparatus 7 receives the update information, and FIG. 5B shows a map displayed after the navigation apparatus 7 receives the update information. In FIGS. 5A and 5B, the map information shown by the broken line is the map information which is not displayed on the display screen. In the following description, it is prescribed that the map information shown by the broken line is the map information which is not displayed on the displayed screen.

A balloon 91 shown in FIG. 5A shows the contents of the update information transmitted from the map information providing center 6. The update information of the map information transmitted from the map information providing center 6 concretely includes two pieces of information, i.e., the ID information of the map information to be updated and the command information indicating whether to set the map information to the available mode or the unavailable mode. The command information is concretely the command ID. The navigation apparatus 7 retains operation processing corresponding to the command ID in program in advance. On receiving the command ID as the command information, the navigation apparatus 7 operates in correspondence to the received command ID. Hereinafter, as an example, it is prescribed that the navigation apparatus 7 sets the map information to the available mode when the command ID is "A", and sets the map information to the unavailable mode when the command ID is "B".

When the road 7 3b which is not presently shown on the display screen is actually completed and the user can use it, the map information providing center 6 transmits the update information for instructing to display the road 73b on the display screen, for example. Concretely, the map information providing center 6 transmits the ID information of the road 73b and the command information instructing to set the map information corresponding to the ID information to the available mode, i.e., the command ID "A", as the update information.

On receiving the update information, the navigation apparatus 7 searches the ID information of the map information of the map data 70 in the data storage unit 36 for the ID information included in the update information. When finding the map information including the ID information, which is coincident with the ID information included in the update information, in the map data 70 in the data storage unit 36, since the command ID being the command information included in the update information is "A", the navigation apparatus 7 sets the attribute ID of the last digit of the ID information of the map information to "1" from *"*0*"* Namely, as shown in the map shown in FIG. 5B, the ID information of the road 73b is changed to "r2253451" from "r2253450". Thereby, the navigation apparatus 7 can display the road 73c and can use it for the route search. Thus, the map data is updated. Thereby, the navigation apparatus 7 can prevent the map information from becoming out of date. At the same time, even when the map data is updated, since the navigation apparatus 7 does not have to receive the updated map data itself, the burden on the infrastructure can be reduced.

Conversely, when the roads and buildings currently displayed on the display screen are discontinued and demolished and hence the user cannot use them, the map information providing center 6 transmits the ID information of the map information subjected to the discontinuity and demolishing and the command information instructing to set the map information corresponding to the ID information to the unavailable mode, i.e., the command ID "B", as the update information.

On receiving the update information the navigation apparatus 7 searches the ID information of the map information of the map data 70 in the data storage unit 36 for the ID information included in the update information. When finding the map information including the ID information, which is coincident with the ID information included in the update information, in the map data 70 in the data storage unit 36, since the command ID being the command information included in the update information is "B", the navigation apparatus 7 sets the attribute ID of the last digit of the ID information of the map information to "0" from "1". Thereby, the navigation apparatus 7 can stop displaying the road and building discontinued and demolished on the display screen, i.e., the navigation apparatus 7 does not display it. Also, the navigation apparatus 7 stops using the road discontinued and demolished for the route search.

The navigation apparatus 7 pre-stores update-notifying text information for informing the update of the map data in the data storage unit 36. On receiving the update information, the navigation apparatus 7 can inform the user of the update of the map data by displaying the text information. Concretely, it is prescribed that, when receiving the command information having the command ID "C" as the command information included in the update information, the navigation apparatus 7 displays the update-notifying text information stored in the data storage unit 36. Namely, when the navigation apparatus 7 displays the update-notifyingtext information the update information includes not only the ID information and the command information having the command ID "A" or "B" but also the command information having the command ID "C". For example, the navigation apparatus 7 pre-stores the text information written as "MAP DATA IS UPDATED" in the data storage unit 36. Every time the navigation apparatus 7 receives the update information, it displays the text information on the display screen for a predetermined time, as shown in a frame 92 shown in FIG. 5B. Thereby, the user can recognize the update of the map data.

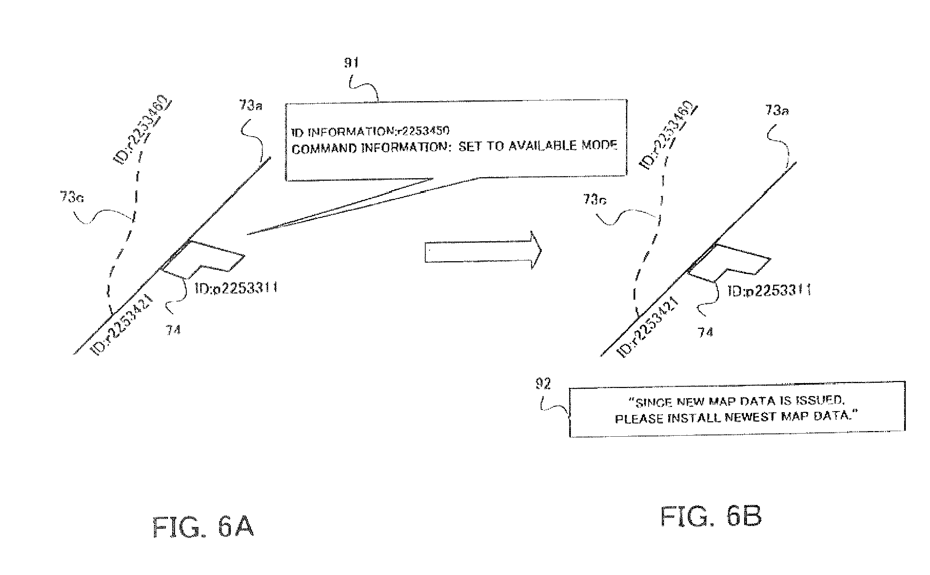

Next, a description will be given of such a case that the map data does not include the map information itself corresponding to the update information. FIG. 6A shows the map displayed before the navigation apparatus 7 receives the update information, and FIG. 6B shows the map displayed after the navigation apparatus 7 receives the update information. As shown by the map shown in FIG. 6A, the map data 70 does not include the map information itself of the road 73b in this example. That is, the pre-obtained map data including the map information of the road 73b is not preinstalled in the navigation apparatus 7 in this example.

The map information providing center 6 transmits the ID information of the road 73b and the command information instructing to set the map information corresponding to the ID information to the available mode, as the update information. Then, the navigation apparatus 7 receives the update information and searches the ID information of the map information of the map data 70 in the data storage unit 36 for the ID information corresponding to the change information.

However, since the map data 70 does not include the map information of the road 73b, the navigation apparatus 7 cannot find the map information including the ID information coincident with the transmitted ID information. Therefore, the navigation apparatus 7 cannot display the road 73b.

As shown in FIG. 6B, in this case, the navigation apparatus 7 pre-stores the text information "SINCE NEW MAP DATA IS ISSUED, PLEASE INSTALL THE NEWEST MAP DATA" in the data storage unit 36. When the navigation apparatus 7 cannot find map information having the ID information coincident with the transmitted ID information, it displays the text information. Thereby, the navigation apparatus 7 can notify the user that the new map data is issued, and can urge the user to install the newest map data.

In the above embodiment, though the road is described as the example of the updated map information, the present invention is not limited to this. Instead or in addition, other map information such as the building may be the updated map information. The map information of the building such as the facilities and the stores (e.g., the convenience store and the gas station) may be set to the available mode or the unavailable mode, based on the received update information, for example.

Additionally, in the above embodiment, when the text information is notified to the user, the text information is pre-stored in the data storage unit 36. However, the application of the present invention is not limited to this. Instead of pre-storing the text information in the data storage unit 36, or in addition to this, the map information providing center 6 may transmit the text information as one piece of the information included in the update information, and the navigation apparatus 7 may display the received text information on the display screen, which will be described in a second embodiment later. Since the text information described in the above embodiment usually becomes comparatively typical, it is pre-stored in the data storage unit 36, and the navigation apparatus 7 displays the text information stored in the data storage unit 36. In the above embodiment, since the map information providing center 6 can reduce the information amount necessary to transmit, this manner becomes preferred.

Further, in the above embodiment, the preinstall is performed in such a manner that the system controller 20 reads out the map data from the disc such as the CD or the DVD including the map data and stores it in the data storage unit 36. But the application of the present invention is not limited to this. For example, instead of reading out the map data from the disc such as the CD or the DVD including the map data, or in addition to this, the system controller 20 can be designed to obtain the map data from an external map server via the network such as the Internet to store it in the data storage unit 36. Also, the system controller 20 can be designed to obtain the map data from a compact media such as a memory card to store it in the data storage unit 36. (Map Display Method)

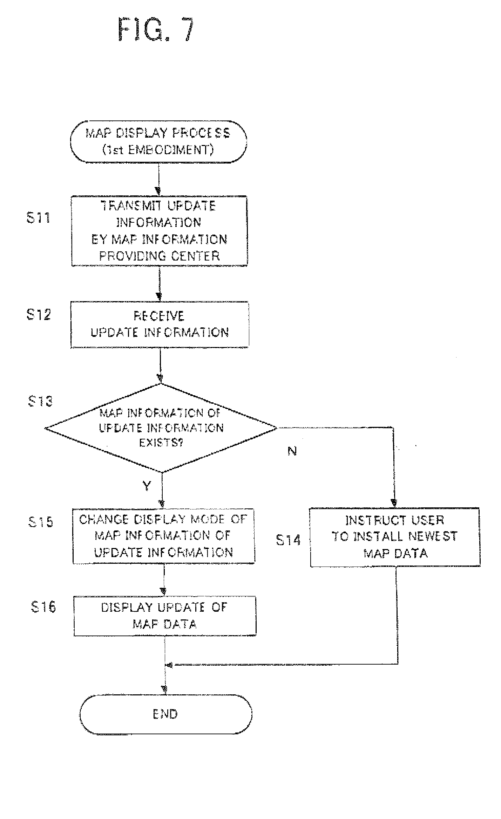

Next, a map display method according to the first embodiment in the case of updating the map will be described with using a flow chart. FIG. 7 shows the flow chart of the map display method according to the first embodiment.

First, the map information providing center 6 transmits the update information of the map information including the ID information and the command information (step S11). The navigation apparatus 7 receives the update information of the map information from the communication device 38 (step S12). The system controller 20 determines whether or not the map information corresponding to the update information exists, i.e., whether or not the ID information coincident with the ID information included in the update information received from the communication device 38 exists in the ID information of map information in the map data 70 (step S13). When it is determined that no ID information coincident with the ID information included in the update information received from the communication device 38 exists in the ID information. according to the plural pieces of map information in the map data 70 (step S13: No), the system controller 20 displays the text information pre-stored in the data storage unit 36, e.g., the text information "SINCE NEW MAP DATA IS ISSUED, PLEASE INSTALL THE NEWEST MAP DATA" on the display screen to urge the user to install the newest map data (step S14).

Meanwhile, when the ID information coincident with the ID information included in the update information received from the communication device 38 is found in the ID information of map information in the map data 70 (step S13: Yes), the system controller 20 changes the attribute ID of the ID information, based on the command information included in the update information, and performs the switching to the available mode or the unavailable mode (step S15). Concretely, when the command 1D being the command information instructs to set the map information corresponding to the ID information to the available mode (command ID "A"), the system controller 20 sets the attribute ID to '"1" from "0" in order to make the map information corresponding to the ID information to the available mode. Meanwhile, when the command ID being the command information instructs to set the map information corresponding to the ID information to the unavailable mode on the display screen (command ID "B"), the system controller 20 sets the attribute ID to "0" from "1" in order to set the map information corresponding to the ID information to the unavailable mode.

Next, when the command information of the update information includes an instruction to display the text information (command ID "C"), the system controller 20 displays the text information pre-stored in the data storage unit 36, e.g., "MAP DATA IS UPDATED" on the display screen for a predetermined time, and informs the user that the map data is updated (step S16). Then, the process ends.

Thereby, the navigation apparatus 7 can prevent the map information from becoming out of date. At the same time, even when the map data is updated, since the navigation apparatus 7 does not have to receive the updated map data itself, the burden on the infrastructure can be reduced.

### [Second Embodiment]

Next, a detailed description will be given of the second embodiment of the present invention. The configuration of the navigation apparatus according to the second embodiment is same as that of the navigation apparatus 7 according to the first embodiment.

In the second embodiment, a description will be given of an example in a case of transmitting disaster information, including information of an evacuation place and a guide route thereto at the time of a disaster such as an earthquake, as an example of the change information of the map data transmitted from the map information providing center 6.

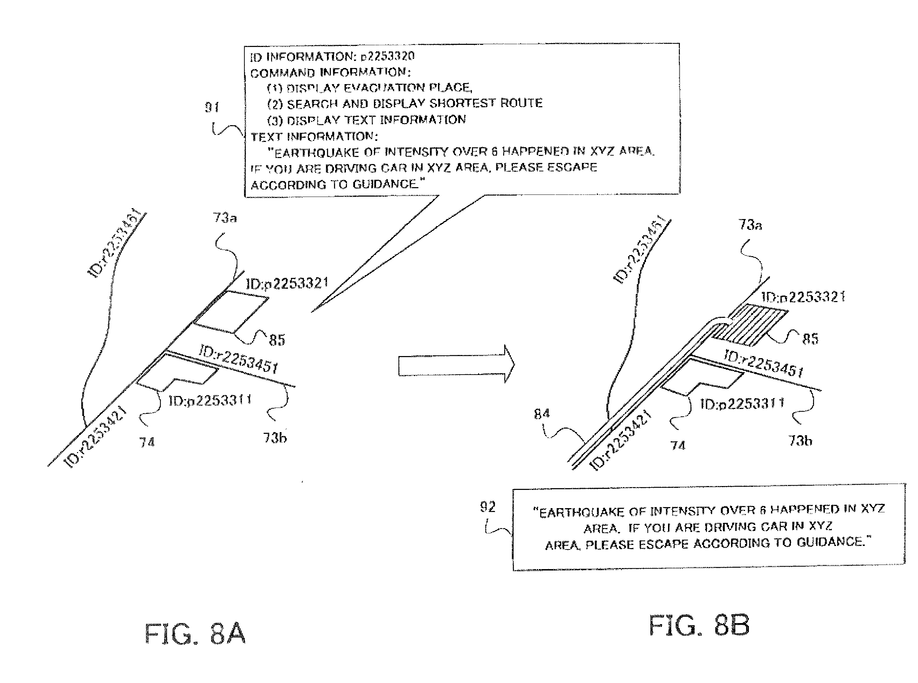

FIG. 8A shows a map displayed before the navigation apparatus 7 receives the disaster information, and FIG. 8B shows a map displayed after the navigation apparatus 7 receives the disaster information.

In FIG. 8A, the balloon 91 indicates the contents of the disaster information transmitted from the map information providing center 6. The disaster information transmitted from the map information providing center 6 includes: ID information of the evacuation place; command information (e.g., command ID "D") instructing to display the map information corresponding to the ID information as the evacuation place emphasized by flashing, for example; command information (e.g., command ID "E") instructing to search and display the shortest route to the evacuation place; the text information for notifying the user of the concrete disaster situation; and command information (e.g., command ID "F") instructing to display the transmitted text information. A plaza 85 is shown in the examples shown in FIGS. 8A and 8B. The plaza 85 is the nearest evacuation place from the present position of the user.

On receiving the disaster information, the navigation apparatus 7 searches the ID information of the map information of the map data 70 in the data storage unit 36 for the ID information corresponding to the disaster information. When finding the map information including the ID information, which is coincident with the ID information corresponding to the disaster information, in the map data 70 in the data storage unit 36, the navigation apparatus 7 executes the command information instructing to display the map information in the command information included in the disaster information, and displays the evacuation place, i.e., the map information as the evacuation place, based on the command ID "D". Namely, the navigation apparatus 7 displays the plaza 85 as the evacuation place. When the attribute ID of the map information indicating the evacuation place is "0", which shows "unavailable mode", if the navigation apparatus 7 receives the command information "D" as the command information, it makes the attribute ID of the map information "1", which shows "available mode", and displays the map information as the evacuation place. Thereby, the navigation apparatus 7 can display the plaza 85 as the evacuation place, and the user can recognize the evacuation place.

Based on the command information instructing to search and display the shortest route to the evacuation place in the command information included in the disaster information, i.e., based on the command ID "E", the navigation apparatus 7 searches for the shortest route from the present position of the user to the plaza 85 serving as the evacuation place and displays it to the user, as shown by a narrow 84 in FIG. 8B. Thereby, the navigation apparatus 7 can inform the user of the route to the evacuation place and can guide the user to the evacuation place.

Further, based on the command information instructing to display the transmitted text information in the command information included in the disaster information, i.e., based on the command ID "F", the navigation apparatus 7 displays the text information included in the disaster information on the display screen, as shown in FIG. 8B. As the text information included in the disaster information, the text information showing the concrete disaster situation such as "AN EARTHQUAKE OF INTENSITY OVER 6 HAPPENED IN XYZ AREA. IF YOU ARE DRIVING A CAR IN THE XYZ AREA, PLEASE EVACUATE ACCORDING TO GUIDANCE." is transmitted and displayed on the display screen. The text information included in to the disaster information has to inform the user of the concrete situation of the disaster, which is often an untypical sentence. Thus, on receiving the disaster information, the navigation apparatus 7 displays, not the text information pre-stored in the navigation apparatus 7, but the text information included in the transmitted disaster information. Thereby, the user can instantaneously know the concrete situation of the disaster.

### (Map Display Method)

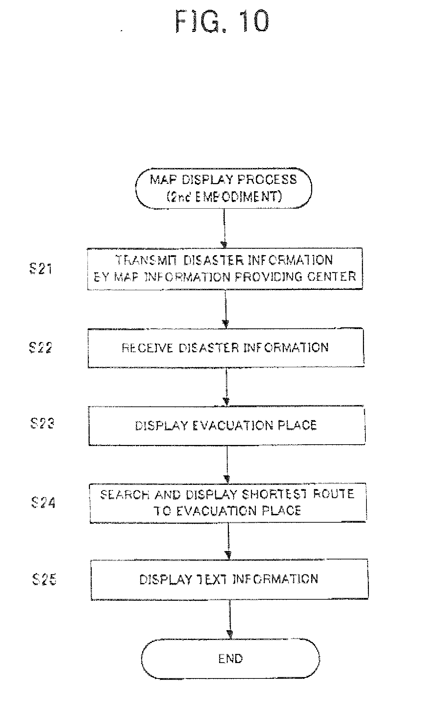

Next, a description will be given of a map display method according to the second embodiment in the case of receiving the disaster information, with reference to a flow chart. FIG. 10 is a diagram showing the flow chart of the map display method according to the second embodiment.

First, the map information providing center 6 transmits the disaster information of the map information including the ID information, the command information and the text information (step S21). The command information includes three pieces of command information: the command information instructing to display the map information corresponding to the ID information as the evacuation place; the command information instructing to search and display the shortest route to the evacuation place; and the command information instructing to display the transmitted text information.

The navigation apparatus 7 receives the disaster information of the map information from the communication device 38 (step S22). The system controller 20 displays the map information by flashing as the evacuation place, based on the command information (command ID "D") instructing to display the map information as the evacuation place, as for the map information including the ID information coincident with the ID information included in the disaster information received from the communication device 38. Thereby, the navigation apparatus 7 can display the map information including the ID information coincident with the ID information included in the disaster information, i.e., the map information indicating the evacuation place (step S23).

Next, based on the command information (command ID "E") instructing to search and display the shortest route to the evacuation place, the system controller 20 searches and displays the shortest route to the evacuation, place (step S24). Further, based on the command information (command ID "F") for instructing to display the transmitted text information, the system controller 20 displays the text information included in the disaster information to inform the user of the concrete situation of the disaster (step S25). Then, the process ends.

Thereby, the navigation apparatus 7 can display the predetermined map information in the map data on the display screen, as the evacuation place, without unnecessarily putting a burden on the infrastructure.

### (Modification)

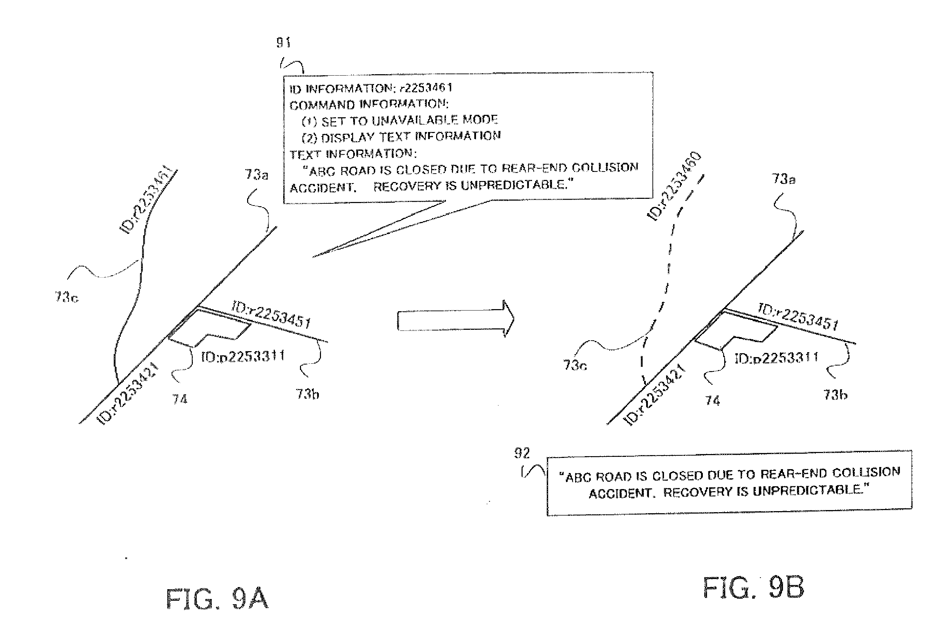

Next, a description will be given of a modification of the second embodiment. In the modification of the second embodiment, a description will be given of an example in a case of transmitting accident information that an accident has happened, as an example of the change information of the map data transmitted from the map information providing center 6. FIG. 9A shows a map displayed before the navigation apparatus 7 receives the accident information, and FIG. 9B shows a map displayed after the navigation apparatus 7 receives the accident information.

In this case, the accident information transmitted from the map information providing center 6 concretely includes four pieces of information: the ID information of the road of the accident; the command information (command ID "B") instructing to set the road to the unavailable mode; the text information informing the user of the concrete situation of the accident; and the command information (command ID "F") instructing to display the transmitted text information. In this example it is prescribed that the accident happens in the road 73c shown in FIG. 9A.

On receiving the accident information, the navigation apparatus 7 searches the ID information of the map information of the map data 70 in the data storage unit 36 for the ID information included in the accident information. When finding the map information including the ID information, which is coincident with the ID information included in the accident information, in the map data 70 in the data storage unit 36, the navigation apparatus 7 sets the attribute ID of the last digit of the ID information of the map information to "0" from "1", based on the command information instructing to set the map information to the unavailable mode. Namely, the navigation apparatus 7 sets the attribute ID of the road 73c to "0" from "1". In this manner, as shown in the map in FIG. 9B, the ID information of the road 73c is set to "r2253460" from "r22534 61". On receiving the accident information, the navigation apparatus 7 stops displaying the road 73c. At the same time, the road 73c is not used for the route search. Therefore, the user is not guided to the road on which the accident happens.

Based on the command information (command ID "F") instructing to display the transmitted text information, the navigation apparatus 7 displays the text information included in the accident information (i.e., the text information "ABC ROAD IS CLOSED DUE TO A REAR-END COLLIISION ACCIDENT. RECOVERY IS UNPREDICTABLE." shown in FIG. 9B) on the display screen, as shown in FIG. 9B. Thereby, the user can instantaneously know the concrete situation of the accident.

### (Application)

Though the change information is distributed by the transmission wave in the above embodiments, the present invention is not limited to this. Instead, the change information may be distributed by other transmission process via broadband, for example. Needless to say, the navigation apparatus 7 includes the receiving device corresponding to the other transmission process in this case.

As described above, in this embodiment, the navigation apparatus includes: the map data including the predetermined map information having the two modes, i.e., the unavailable mode in which the map information is unusable and the available mode in which the map information is usable; the map change information receiving unit for receiving the change information of the predetermined map information distributed by the transmission; and the map display change unit for switching the two modes in the predetermined map information based on the received change information. Thereby, even when the map data is changed, the navigation apparatus does not have to receive the changed map data itself, and the burden on the infrastructure can be reduced. Thus, the navigation apparatus can easily change the map data.

## Claims

1. A navigation apparatus (7) comprising:
map data (70) which includes predetermined map information used in one of two modes including an unavailable mode in which the map information is unusable and an available mode in which the map information is usable;
a map change information receiving unit (37,38) which receives change information of the predetermined map information distributed by transmission; and
a map display change unit (20,40) which switches the two modes of the predetermined map information based on the received change information.

2. The navigation apparatus (7) according to claim 1,
wherein the predetermined map information is map information which is preset to the unavailable mode,
wherein the change information is update information for instructing to set the predetermined map information to the available mode, and
wherein the map display change unit (20,40) sets the predetermined map information to the available mode based on the received update information.

3. The navigation apparatus (7) according to claim 1,
wherein the predetermined map information is map information which is preset to the available mode,
wherein the change information is update information for instructing to set the predetermined map information to the unavailable mode, and
wherein the map display change unit (20,40) sets the predetermined map information to the unavailable mode based on the received update information.

4. The navigation apparatus according to claim 2 or 3,
wherein, on receiving the update information, the map display change unit (20,40) displays updating of the map data on a display screen.

5. The navigation apparatus according to any one of claims 1 to 4, wherein the map display change unit (20,40) displays issue of newest map data to a user on the display screen (44), when the predetermined map information does not exist in the map data (70).

6. The navigation apparatus according to any one of claims 1 to 5, wherein the predetermined map information shows a road or/and a building.

7. The navigation apparatus according to claim 1,
wherein the change information is disaster information including first command information for instructing to display the predetermined map information as an evacuation place, and
wherein the map display change unit (20,40) displays the predetermined map information as the evacuation place, based on the first command information included in the received disaster information.

8. The navigation apparatus according to claim 7,
wherein the disaster information includes second command information for instructing to search a shortest route to the evacuation place and display the shortest route on the display screen (44), and
wherein the map display change unit searches the shortest route to the evacuation place, based on the second command information included in the received disaster information, and displays the shortest route on the display screen (44).

9. The navigation apparatus according to claim 7 or 8,
wherein the disaster information includes text information indicating a disaster situation and third command information for instructing to display the text information on the display screen (44), and
wherein the map display change unit (20,40) displays contents of the text information included in the disaster information on the display screen (44), based on the third command information included in the received disaster information.

10. A program executed by a navigation apparatus (7) including map data (70) which includes predetermined map information used in one of two modes including an unavailable mode in which the map information is unusable and an available mode in which the map information is usable, making the navigation apparatus function as :
a map change information receiving unit (37, 38) which receives change information of the predetermined map information delivered by transmission; and
a map display change unit (20,40) which switches the two modes of the predetermined map information, based on the received change information.
